# EUROPÄISCHE PATENTSCHRIFT

(11) **EP 2 852 768 B1**
(45) Veröffentlichungstag und Bekanntmachung des Hinweises auf die Patenterteilung: **07.12.2016**
(21) Anmeldenummer: 13722444.0
(22) Anmeldetag: 14.05.2013
(51) Int. Cl.: F16B 37/04, F16B 7/18, F16B 21/02

(54) **BEFESTIGUNGSVORRICHTUNG**
FIXING DEVICE
DISPOSITIF DE FIXATION

(30) Priorität: 21.05.2012 DE 102012208482
(43) Veröffentlichungstag der Anmeldung: 01.04.2015
(73) Patentinhaber: Hilti Aktiengesellschaft, 9494 Schaan (LI)
(72) Erfinder: Wottrich, Alexander, 6800 Feldkirch (AT); Lippuner, Ralph, 9470 Buchs (CH)
(86) Internationale Anmeldenummer: PCT/EP2013/059926
(87) Internationale Veröffentlichungsnummer: WO 2013/174677

(56) Entgegenhaltungen:
- EP-A1- 0 210 577
- DE-C2- 4 143 352
- US-A1- 2002 048 495
- US-A1- 2002 071 735

## Beschreibung

Die Erfindung betrifft eine Befestigungsvorrichtung gemäss dem Oberbegriff des Anspruchs 1 zum Befestigen von Gewindestangen am Schlitz einer C-Profilschiene. Eine solche Vorrichtung ist ausgestattet mit einem Hintergreifelement, welches durch den Schlitz in das Innere der Profilschiene einführbar ist und in der Profilschiene um zumindest eine Eindrehachse derart verdrehbar ist, dass es den Schlitz begrenzende Schenkel der Profilschiene hintergreift, wobei das Hintergreifelement zumindest eine senkrecht zur Eindrehachse verlaufende Aufnahme zum Festlegen einer Gewindestange aufweist.

Eine gattungsgemässe Befestigungsvorrichtung ist aus der US 2002/0048495 A1 bekannt. Weitere Befestigungsvorrichtungen gehen aus der DE 41 43 352 C2, der US 2002/0071735 A1 und der EP 0 210 577 A1 hervor. Noch eine Befestigungsvorrichtung ist aus der US 2002071735 A bekannt. Sie kann zum Anbinden einer Gewindestange an den Schlitz einer C-Profilschiene dienen.

Aufgabe der Erfindung ist es, eine gattungsgemässe Vorrichtung so weiterzubilden, dass bei geringem Aufwand und hoher Zuverlässigkeit ein besonders grosses Einsatzspektrum gegeben ist.

Die Aufgabe wird erfindungsgemäss durch eine Vorrichtung mit den Merkmalen des Anspruchs 1 gelöst. Bevorzugte Ausführungsformen sind in den abhängigen Ansprüchen angegeben.

Eine erfindungsgemässe Vorrichtung ist dadurch gekennzeichnet, dass das Hintergreifelement eine Flügelmutter und einen an der Flügelmutter angeordneten Bügel aufweist, wobei die zumindest eine senkrecht zur Eindrehachse verlaufende Aufnahme am Bügel angeordnet ist.

Bei einer gattungsgemässen Vorrichtung weist das Hintergreifelement zumindest eine senkrecht zur Eindrehachse verlaufende Aufnahme zum Festlegen einer Gewindestange auf.

Die Erfindung basiert unter anderem auf der Feststellung, dass C-Profilschienen häufig mehrere Arten von Öffnungen aufweisen, nämlich zum einen den längs der gesamten Schiene verlaufenden Schlitz, zum anderen aber häufig auch einzelne Durchgangsöffnungen, die in den Seitenwänden und auch im Boden der Schiene angeordnet sind. Hierauf aufbauend schlägt die Erfindung eine Befestigungsvorrichtung vor, mit der Elemente in besonders einfacher Weise sowohl am Schlitz als auch an den seitlichen Durchgangsöffnungen angebunden werden können. Zum Anbinden an den Schlitz weist die Vorrichtung ein Hintergreifelement auf, das durch den Schlitz in den Innenraum der Schiene eingeführt und sodann durch Verdrehen um die Eindrehachse formschlüssig am Schlitz festgelegt werden kann. Zum Anbinden an die seitlichen Durchgangsöffnungen weist das Hintergreifelement aber auch zumindest eine Aufnahme auf, in der eine senkrecht zur Eindrehachse verlaufende Gewindestange festgelegt werden kann. Somit kann das Hintergreifelement auch eine Gewindestange an der Schiene fixieren, welche seitlich durch eine seitliche Durchgangsöffnung in das Schieneninnere eingeführt ist. Insbesondere können somit nach der Erfindung in besonders einfacher Weise Elemente in einer Vielzahl von räumlichen Anordnungen relativ zur Schiene an der Schiene angebunden werden, so dass ein besonders breites Anwendungsspektrum gegeben ist.

Besonders bevorzugt ist es, dass das Hintergreifelement zwei senkrecht zur Eindrehachse verlaufende Aufnahmen zum Festlegen einer Gewindestange aufweist, die, vorzugsweise koaxial, auf gegenüberliegenden Seiten des Hintergreifelements angeordnet sind. Hierdurch ist es möglich, Gewindestangen auf gegenüberliegenden Seiten der Schiene anzubinden, ohne dass es auf die Orientierung des Hintergreifelements relativ zur Schiene ankommt. Das Anwendungsspektrum wird daher bei besonders einfacher Handhabung noch zusätzlich erweitert. Beim bestimmungsgemässen Gebrauch sind die besagten Aufnahmen an den Seitenwänden der Profilschiene angeordnet. Durch die vorzugsweise koaxiale Anordnung der beiden Aufnahmen kann die Handhabung noch weiter erleichtert werden.

Weiterhin ist es bevorzugt, dass das Hintergreifelement zumindest eine parallel, insbesondere koaxial zur Eindrehachse verlaufende Aufnahme zum Festlegen einer Gewindestange aufweist. Diese Aufnahmen kann zum Festlegen einer durch den Schlitz in das Schieneninnere verlaufenden Gewindestange oder/und zum Festlegen einer durch den Schienenboden in das Schieneninnere verlaufenden Gewindestange dienen, wobei unter dem Schienenboden die Schienenwand verstanden wird, welche dem Schlitz gegenüberliegt. Vorzugsweise kann das Hintergreifelement zwei parallel, insbesondere koaxial zur Eindrehachse verlaufende Aufnahmen zum Festlegen jeweils einer Gewindestange aufweisen, die, bevorzugt koaxial, auf gegenüberliegenden Seiten des Hintergreifelements angeordnet sind. Hierdurch kann das Anwendungsspektrum noch erweitert werden. Vorzugsweise sind also vier Aufnahmen vorgesehen, wobei benachbarte Aufnahmen geeigneterweise rechtwinklig zueinander verlaufen. Insbesondere kann vorgesehen sein, dass sich die Achsen der Aufnahmen in einem gemeinsamen Punkt schneiden.

Eine weitere zweckmässige Ausgestaltung der Erfindung liegt darin, dass das Hintergreifelement ringförmig ausgebildet ist. Dies kann einerseits im Hinblick auf den Material- und Fertigungsaufwand vorteilhaft sein. Darüber hinaus kann durch eine ringförmige Struktur eine besonderes hohe Elastizität bereitgestellt werden, die beispielsweise dazu dienen kann, das Hintergreifelement im Schieneninneren festzuklemmen. Zumindest eine der Aufnahmen, vorzugsweise alle Aufnahmen, sind geeigneterweise an der Ringaussenseite des ringförmigen Hintergreifelements ausgebildet.

Beispielsweise kann vorgesehen sein, dass zumindest eine der Aufnahmen, vorzugsweise alle Aufnahmen, Durchgangslöcher sind. Insbesondere wenn das Hintergreifelement ringförmig ist, können solche Durchgangslöcher besonders einfach gefertigt werden. Grundsätzlich könnten die Aufnahmen aber auch als Sacklöcher ausgeführt sein.

Zumindest eine der Aufnahmen, vorzugsweise alle Aufnahmen, dienen vorzugsweise zum formschlüssigen Festlegen jeweils einer Gewindestange. Eine besonders einfache und zugleich zuverlässige Ausgestaltung ist dadurch gegeben, dass zumindest eine der Aufnahmen, vorzugsweise alle Aufnahmen, ein Innengewinde aufweisen.

Erfindungsgemäss weist das Hintergreifelement eine Flügelmutter und einen an der Flügelmutter angeordneten Bügel auf, wobei zumindest eine der Aufnahmen am Bügel angeordnet ist. Dies kann beispielsweise im Hinblick auf den Herstellungsaufwand vorteilhaft sein. Die Flügelmutter kann zur Anbindung am Schlitz der Schiene dienen. Da die zusätzliche Aufnahme am Bügel angeordnet ist, wird die Funktion der Flügelmutter durch die Aufnahme nicht beeinträchtigt. Eine Befestigungsvorrichtung kann auch alleine durch den erfindungsgemässen Bügel gebildet werden, ohne dass eine Flügelmutter erforderlich wäre.

Am Bügel sind zumindest eine der senkrecht zur Eindrehachse verlaufenden Aufnahmen, vorzugsweise beide senkrecht zur Eindrehachse verlaufenden Aufnahmen angeordnet. Zusätzlich kann am Bügel eine der parallel zur Eindrehachse verlaufenden Aufnahmen angeordnet sein, nämlich insbesondere die Aufnahme, welche beim bestimmungsgemässen Gebrauch am Schienenboden angeordnet ist. Die zweite der parallel zur Eindrehachse verlaufenden Aufnahmen kann in konstruktiv besonders einfacher Weise an der Flügelmutter angeordnet sein. Es ist also besonders vorteilhaft, dass eine der Aufnahmen an der Flügelmutter und drei der Aufnahmen am Bügel angeordnet sind.

Eine weitere zweckmässige Ausgestaltung der Erfindung liegt darin, dass der Bügel mittels eines Rastverschlusses an der Flügelmutter befestigt ist. Dies ermöglicht es, Bügel und Flügelmutter getrennt zum Monteur zu liefern. Benötigt der Monteur ausschliesslich eine Anbindung am Schienenschlitz, so kann er hierzu die Flügelmutter alleine verwenden. Ist eine Anbindung an einer der Schienenseitenwände oder am Schienenboden vorgesehen, kann der Monteur den Bügel einfach mittels des Rastverschlusses an der Flügelmutter festlegen. Somit kann in besonders anwenderfreundlicher Weise der Materialeinsatz reduziert werden. Besonders bevorzugt ist es, dass die Flügelmutter und der Bügel lösbar miteinander verbunden sind, insbesondere mittels des Rastverschlusses. Grundsätzlich können der Bügel und die Flügelmutter auch dauerhaft miteinander verbunden sein, beispielsweise verstemmt sein.

Eine besonders günstige und zugleich zuverlässige Ausgestaltung liegt darin, dass der Rastverschluss durch zwei am Bügel angeordnete Klauen gebildet wird, die in eine an der Flügelmutter angeordnete Aufnahme zum Festlegen einer Gewindestange eingreifen. Insbesondere können die Klauen an einem in der Aufnahme angeordneten Innengewinde formschlüssig festliegen. Das Innengewinde hat somit also eine Doppelfunktion, bei der es einerseits zum Festlegen einer Gewindestange und andererseits zum Festlegen des Bügels dient.

Weiterhin ist es bevorzugt, dass die erfindungsgemässe Befestigungsvorrichtung eine Klemmplatte, insbesondere aus einem elastischen Material, zur aussenseitigen Anlage an die C-Profilschiene aufweist. Diese Klemmplatte kann zum Anpressen des Hintergreifelements an die Schenkel der Schiene, insbesondere in einer Vormontagestellung der Vorrichtung, dienen.

Die Erfindung betrifft auch eine Anordnung bestehend aus einer erfindungsgemässen Befestigungsvorrichtung und einer C-Profilschiene, an deren Schenkeln die Befestigungsvorrichtung, bevorzugt formschlüssig, festgelegt ist.

Insbesondere kann die Befestigungsvorrichtung Gewinde zur Anbindung von Standardgewindestangen an mehreren Schienenseiten zur Verfügung stellen. Die Befestigungsvorrichtung kann dabei durch den Schlitz der Schiene an einer beliebigen Position längs der Schiene eingesetzt werden. In einer Vormontagestellung kann die Befestigungsvorrichtung mit geringem Kraftaufwand längs der Schiene verschoben werden, wobei die Befestigungsvorrichtung gleichzeitig gegen unerwünschte Bewegungen gesichert ist. Dies wird durch eine Fixiereinrichtung ermöglicht, die einerseits aus der Klemmplatte besteht, welche die Vorrichtung schienenaussenseitig hält, und andererseits aus Zähnen an der Oberseite des Hintergreifelements, welche mit Zähnen an den Schenkeln der Schiene korrespondieren.

Unter einer Gewindestange kann jede Stange verstanden werden, welche zumindest bereichsweise ein Aussengewinde aufweist. Die Gewindestange kann auch den Schaft einer Schraube bilden, d.h. die erfindungsgemässen Aufnahmen können auch zum Festlegen einer Schraube, bestehend aus einem Schraubenkopf und einer Gewindestange, vorgesehen sein.

Die Erfindung wird nachfolgend anhand eines bevorzugten Ausführungsbeispiels näher erläutert, das schematisch in den beiliegenden Figuren dargestellt ist. In den Figuren zeigen schematisch:
- Figur 1:: eine perspektivische Darstellung einer Ausführungsform einer erfindungsgemässen Befestigungsvorrichtung;
- Figur 2:: die Befestigungsvorrichtung aus Figur 1 in Schnittansicht;
- Figur 3:: die Befestigungsvorrichtung aus Figur 1 in Explosionsdarstellung; und
- Figur 4:: die Befestigungsvorrichtung aus Figur 1, eingesetzt in eine C-Profilschiene, in Seitenansicht.

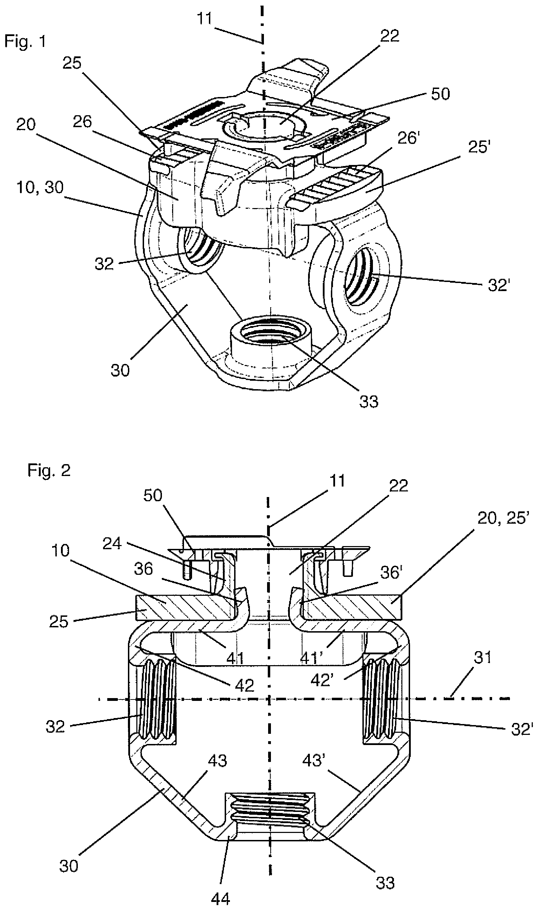

Ein Ausführungsbeispiel einer erfindungsgemässen Befestigungsvorrichtung ist in den Figuren 1 bis 4 dargestellt.

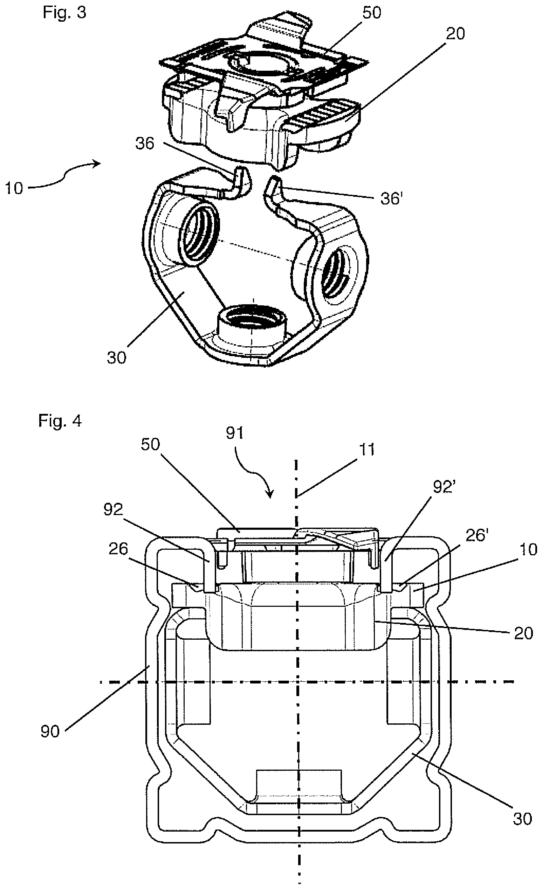

Die Befestigungsvorrichtung weist ein Hintergreifelement 10 auf, welches aus einer Flügelmutter 20 und einem Bügel 30 besteht. Das Hintergreifelement 10 und/oder der Bügel 30 ist durch den Längsschlitz 91 der in Figur 4 gezeigten C-Profilschiene 90 in das Innere der Schiene 90 einführbar, und kann sodann durch Drehen um die Eindrehachse 11 in die in Figur 4 gezeigte Position verbracht werden, in der sie bzw. er die Schenkel 92 und 92' der Schiene 90, welche den Längsschlitz 91 der Schiene 90 umranden, hintergreift, so dass das Hintergreifelement 10 formschlüssig am Schlitz 91 gesichert ist.

Die Befestigungsvorrichtung weist ferner eine Klemmplatte 50 auf, die am Hintergreifelement 10 angeordnet ist. Im dargestellten Ausführungsbeispiel besteht die Klemmplatte 50 aus einem elastischen Kunststoff. Sie kann aber auch aus Metall bestehen, und der dem Hintergreifelement 10 über eine Feder gekoppelt sein. Die Klemmplatte 50 beaufschlagt die Schiene 90 an ihrer Aussenseite, wenn das Hintergreifelement 10 in die Schiene 90 eingedreht ist, und zwingt das Hintergreifelement 10 gegen die Schenkel 92, 92', so dass eine Vormontageposition gegeben ist, in welcher die Befestigungsvorrichtung nur mit einem gewissen Kraftaufwand längs der Schiene verschoben werden kann.

Wie insbesondere in den Figuren 1 und 2 dargestellt ist, weist die Flügelmutter einen zentralen Kragen 24, durch den die Eindrehachse 11 hindurch verläuft, sowie zwei Flügel 25 und 25' auf, die auf gegenüberliegenden Seiten des Kragens 24 senkrecht zur Eindrehachse 11 vom Kragen 24 abstehen. Wie insbesondere Figur 1 zeigt, ist an jedem der Flügel 25 und 25' jeweils ein verzahnter Bereich 26 bzw. 26' ausgebildet. Die verzahnten Bereiche 26 bzw. 26' liegen in der in Figur 4 gezeigten eingedrehten Stellung des Hintergreifelements 10 jeweils an einem Schenkel 92 bzw. 92' an und erhöhen den Widerstand gegenüber eine Längsverschiebung des Hintergreifelements 10 in der Schiene 90.

Das Hintergreifelement 10 weist insgesamt vier Aufnahmen zur Aufnahme und zum formschlüssigen Festlegen einer Gewindestange auf: eine erste Aufnahme 22 befindet sich im Kragen 24 der Flügelmutter 20 und läuft durch den Kragen 24 der Flügelmutter 20 hindurch. Drei weitere Aufnahmen, nämlich zwei seitliche Aufnahmen 32 und 32' und eine untere Aufnahme 33, befinden sich im Bügel 30. Die in der Flügelmutter 20 angeordnete erste Aufnahme 22 und die untere Aufnahme 33 des Bügels 30 sind koaxial zueinander und insbesondere koaxial mit der Eindrehachse 11 auf gegenüberliegenden Seiten des Hintergreifelements 10 angeordnet. Die beiden seitlichen Aufnahmen 32 und 32' sind ebenfalls koaxial zueinander auf gegenüberliegenden Seiten des Hintergreifelements 10 angeordnet, wobei die Achse 31 dieser seitlichen Aufnahmen 32 und 32' die Achse 11 der beiden anderen Aufnahmen 22 und 33 rechtwinklig schneidet (vgl. Fig. 2).

Die Aufnahmen 22, 32, 32' und 33 weisen jeweils ein Innengewinde auf, welches mit der Gewindestange korrespondiert, wobei das Innengewinde der Aufnahme 22 der Übersichtlichkeit halber in den Figuren nicht gezeigt ist. Die am Bügel 30 ausgebildeten Aufnahmen 32, 32' und 33 sind als Durchzüge ausgestattet, welche in das Innere des Bügels zeigen, d.h. sie weisen jeweils einen Kragen auf, der in das Innere des Bügels weist.

Der Bügel 30 kann vorzugsweise über einen Rastverschluss lösbar mit der Flügelmutter 20 verbunden sein. Dieser Rastverschluss weist zwei Klauen 36, 36' auf, die endseitig am Bügel 30 ausgebildet sind, und die bei geschlossenem Rastverschluss in der oberen Aufnahme 22, sofern vorhanden am dortigen Innengewinde, festliegen.

Wie insbesondere Figur 2 zeigt, ist der Bügel 30 spiegelsymmetrisch ausgebildet. Er weist zwei obere Stege 41, 41', zwei Seitenstege 42 und 42', zwei Verbindungsstege 43 und 43' sowie einen unteren Steg 44 auf. Die beiden seitlichen Aufnahmen 32 und 32' sind an den beiden Seitenstegen 42 und 42' ausgebildet. An jeden der Seitenstege 42 und 42' schliesst sich auf der einen Seite ein oberer Steg 41 bzw. 41' und auf der anderen Seite ein Verbindungssteg 43 bzw. 43' an, wobei die beiden Verbindungsstege 43 bzw. 43' wiederum über den unteren Steg 44 verbunden sind. Die beiden Klauen 36, 36' sind an den oberen Stegen 41, 41' angeordnet, und zwar auf der Seite des jeweiligen oberen Stegs 41 bzw. 41', welche dem jeweiligen Seitensteg 42 bzw. 42' gegenüberliegt.

Die beiden oberen Stege 41 und 41' sind koplanar angeordnet und verlaufen senkrecht zur Eindrehachse 11. Die beiden Seitenstege 42, 42' ragen senkrecht vom jeweiligen oberen Steg 41 bzw. 41' ab und/oder verlaufen parallel zur Eindrehachse 11. Die Verbindungsstege 43 bzw. 43' ragen schrägwinklig, insbesondere unter einem Winkel von 45°, vom jeweiligen Seitensteg 42 bzw. 42' ab. Diese Anordnung kann das Einführen und Eindrehen in die Schiene 90 erleichtern.

## Patentansprüche

1. Befestigungsvorrichtung zum Befestigen eines Elements am Schlitz (91) einer C-Profilschiene (90), mit einem Hintergreifelement (10), welches durch den Schlitz (91) in das Innere der Profilschiene (90) einführbar ist und in der Profilschiene (90) um zumindest eine Eindrehachse (11) derart verdrehbar ist, dass es den Schlitz (91) begrenzende Schenkel (92, 92') der Profilschiene (90) hintergreift,
wobei das Hintergreifelement (10) zumindest eine senkrecht zur Eindrehachse (11) verlaufende Aufnahme (32) zum Festlegen einer Gewindestange aufweist,
**dadurch gekennzeichnet,**
**dass** das Hintergreifelement (10) eine Flügelmutter (20) und einen an der Flügelmutter (20) angeordneten Bügel (30) aufweist, wobei die zumindest eine senkrecht zur Eindrehachse (11) verlaufende Aufnahme (32) am Bügel (30) angeordnet ist.

2. Befestigungsvorrichtung nach Anspruch 1,
**dadurch gekennzeichnet,**
**dass** das Hintergreifelement (10) zwei senkrecht zur Eindrehachse (11) verlaufende Aufnahmen (32, 32') zum Festlegen einer Gewindestange aufweist, die koaxial auf gegenüberliegenden Seiten des Hintergreifelements (10) angeordnet sind.

3. Befestigungsvorrichtung nach einem der Ansprüche 1 oder 2,
**dadurch gekennzeichnet,**
**dass** das Hintergreifelement (10) zumindest eine parallel, insbesondere koaxial zur Eindrehachse (11) verlaufende Aufnahme (22 oder 33) zum Festlegen einer Gewindestange aufweist.

4. Befestigungsvorrichtung nach Anspruch 3,
**dadurch gekennzeichnet,**
**dass** das Hintergreifelement (10) zwei parallel, insbesondere koaxial zur Eindrehachse (11) verlaufende Aufnahmen (22, 23) zum Festlegen einer Gewindestange aufweist, die koaxial auf gegenüberliegenden Seiten des Hintergreifelements (10) angeordnet sind.

5. Befestigungsvorrichtung nach einem der vorstehenden Ansprüche,
**dadurch gekennzeichnet,**
**dass** das Hintergreifelement (10) ringförmig ausgebildet ist, wobei zumindest eine der Aufnahmen (22, 33, 32 oder/und 32') an der Ringaussenseite des ringförmigen Hintergreifelements (10) ausgebildet ist.

6. Befestigungsvorrichtung nach einem der vorstehenden Ansprüche,
**dadurch gekennzeichnet,**
**dass** zumindest eine der Aufnahmen (22, 33, 32 oder/und 32') ein Durchgangsloch ist, und dass zumindest eine der Aufnahmen (22, 33, 32 oder/und 32') ein Innengewinde aufweist.

7. Befestigungsvorrichtung nach einem der vorstehenden Ansprüche,
**dadurch gekennzeichnet,**
**dass** eine der Aufnahmen (22) an der Flügelmutter (20) und drei der Aufnahmen (33, 32, 32') am Bügel (30) angeordnet sind.

8. Befestigungsvorrichtung nach einem der vorstehenden Ansprüche,
**dadurch gekennzeichnet,**
**dass** der Bügel (30) mittels eines Rastverschlusses an der Flügelmutter (20) befestigt ist.

9. Befestigungsvorrichtung nach Anspruch 8,
**dadurch gekennzeichnet,**
**dass** der Rastverschluss durch zwei am Bügel (30) angeordnete Klauen (36, 36') gebildet wird, die in eine an der Flügelmutter (20) angeordnete Aufnahme (22) zum Festlegen einer Gewindestange eingreifen.

10. Befestigungsvorrichtung nach einem der vorstehenden Ansprüche,
**dadurch gekennzeichnet,**
**dass** sie eine Klemmplatte (50), insbesondere aus einem elastischen Material, zur aussenseitigen Anlage an der C-Profilschiene (90) aufweist.

11. Anordnung bestehend aus einer Befestigungsvorrichtung nach einem der vorstehenden Ansprüche und einer C-Profilschiene (90), an deren Schenkeln (92, 92') die Befestigungsvorrichtung formschlüssig festgelegt ist.

## Claims

1. Fastening device for fastening an element to the slot (91) of a C-profiled rail (90), comprising a rear-engagement element (10) which is insertable through the slot (91) into the interior of the profiled rail (90) and can be rotated in the profiled rail (90) about at least one screw-insertion axis (11) in such a way that it engages behind the flanges (92, 92') of the profiled rail (90) which delimit the slot (91),
wherein the rear-engagement element (10) has at least one receptacle (32) disposed perpendicularly to the screw-insertion axis (11) for securing a threaded rod,
**characterised in that**
the rear engagement element (10) comprises a wing-nut (20) and a shackle (30) arranged on the wing-nut (20), the at least one receptacle (32) disposed perpendicularly to the screw-insertion axis (11) being arranged on the shackle (30).

2. Fastening device according to Claim 1,
**characterised in that**
the rear-engagement element (10) has two receptacles (32, 32') disposed perpendicularly to the screw-insertion axis (11) for securing a threaded rod, which receptacles (32, 32') are arranged coaxially on opposite sides of the rear-engagement element (10).

3. Fastening device according to either of Claims 1 and 2,
**characterised in that**
the rear-engagement element (10) has at least one receptacle (22 or 33) disposed parallel to, in particular coaxially with, the screw-insertion axis (11) for securing a threaded rod.

4. Fastening device according to Claim 3,
**characterised in that**
the rear-engagement element (10) has two receptacles (22, 23) disposed parallel to, in particular coaxially with, the screw-insertion axis (11) for securing a threaded rod, which receptacles (22, 23) are arranged coaxially on opposite sides of the rear-engagement element (10).

5. Fastening device according to any one of the preceding claims,
**characterised in that**
the rear-engagement element (10) has an annular configuration, at least one of the receptacles (22, 33, 32 and/or 32') being formed on the annular outer side of the annular rear-engagement element (10).

6. Fastening device according to any one of the preceding claims,
**characterised in that**
at least one of the receptacles (22, 33, 32 and/or 32') is a through-aperture, and **in that** at least one of the receptacles (22, 33, 32 and/or 32') has an internal thread.

7. Fastening device according to any one of the preceding claims,
**characterised in that**
one of the receptacles (22) is arranged on the wing-nut (20) and three of the receptacles (33, 32, 32') are arranged on the shackle (30).

8. Fastening device according to any one of the preceding claims,
**characterised in that**
the shackle (30) is fastened to the wing-nut (20) by means of a snap-in closure.

9. Fastening device according to Claim 8,
**characterised in that**
the snap-in closure is formed by two catches (36, 36') which are arranged on the shackle (30) and engage in a receptacle (22) arranged on the wing-nut (20) for securing a threaded rod.

10. Fastening device according to any one of the preceding claims,
**characterised in that**
it includes a clamping plate (50), in particular made of an elastic material, for bearing against the outside of the C-profiled rail (90).

11. Arrangement consisting of a fastening device according to any one of the preceding claims, and a C-profiled rail (90) to the flanges (92, 92') of which the fastening device is positively secured.

## Revendications

1. Dispositif de fixation destiné à fixer un élément sur la fente (91) d'un rail profilé en C (90), comportant un élément de prise arrière (10) qui peut être inséré à travers la fente (91) dans l'intérieur du rail profilé (90) et qui peut tourner dans le rail profilé (90) autour d'au moins un axe de vissage (11) de telle sorte qu'il saisit par l'arrière des ailes (92, 92') du rail profilé (90) délimitant la fente (91),
dans lequel l'élément de prise arrière (10) comporte au moins un logement (32) s'étendant perpendiculairement à l'axe de vissage (11) pour fixer une tige filetée,
**caractérisé en ce que**
l'élément de prise arrière (10) comporte un écrou papillon (20) et un étrier (30) agencé sur l'écrou papillon (20), dans lequel le au moins un logement (32) s'étendant perpendiculairement à l'axe de vissage (11) est agencé sur l'étrier (30).

2. Dispositif de fixation selon la revendication 1,
**caractérisé en ce que**
l'élément de prise arrière (10) comporte deux logements (32, 32') s'étendant perpendiculairement à l'axe de vissage (11) pour fixer une tige filetée, lesquels logements sont agencés coaxialement sur des côtés opposés de l'élément de prise arrière (10).

3. Dispositif de fixation selon l'une des revendications 1 ou 2,
**caractérisé en ce que**
l'élément de prise arrière (10) comporte au moins un logement (22 ou 33) s'étendant parallèlement, en particulier coaxialement à l'axe de vissage (11) pour fixer une tige filetée.

4. Dispositif de fixation selon la revendication 3,
**caractérisé en ce que**
l'élément de prise arrière (10) comporte deux logements (22, 23) s'étendant parallèlement, en particulier coaxialement à l'axe de vissage (11) pour fixer une tige filetée, lesquels logements sont agencés coaxialement sur des côtés opposés de l'élément de prise arrière (10).

5. Dispositif de fixation selon l'une des revendications précédentes,
**caractérisé en ce que**
l'élément de prise arrière (10) est formé de manière annulaire, dans lequel au moins un des logements (22, 33, 32 et/ou 32') est formé sur le côté extérieur annulaire de l'élément de prise arrière annulaire (10).

6. Dispositif de fixation selon l'une des revendications précédentes,
**caractérisé en ce**
**qu'**au moins un des logements (22, 33, 32 et/ou 32') est un trou traversant et en ce
**qu'**au moins un des logements (22, 33, 32 et/ou 32') comporte un filet intérieur.

7. Dispositif de fixation selon l'une des revendications précédentes,
**caractérisé en ce que**
l'un des logements (22) est agencé sur l'écrou papillon (20) et trois des logements (33, 32, 32') sont agencés sur l'étrier (30).

8. Dispositif de fixation selon l'une des revendications précédentes,
**caractérisé en ce que**
l'étrier (30) est fixé sur l'écrou papillon (20) au moyen d'une fermeture à encliquetage.

9. Dispositif de fixation selon la revendication 8,
**caractérisé en ce que**
la fermeture à encliquetage est formée par deux griffes (36, 36') agencées sur l'étrier (30), lesquelles griffes s'engagent dans un logement (22) agencé sur l'écrou papillon (20) pour fixer une tige filetée.

10. Dispositif de fixation selon l'une des revendications précédentes,
**caractérisé en ce**
**qu'**il comporte une plaque de serrage (50), en particulier constituée d'un matériau élastique, pour un placement sur le côté extérieur du rail profilé en C (90).

11. Agencement constitué d'un dispositif de fixation selon l'une des revendications précédentes et d'un rail profilé en C (90) sur les ailes (92, 92') duquel est fixé le dispositif de fixation, par complémentarité de formes.
